# EUROPEAN PATENT APPLICATION

(11) **EP 3 228 955 A1**
(43) Date of publication of application: **11.10.2017**
(21) Application number: 16164204.6
(22) Date of filing: 07.04.2016
(51) Int. Cl.: F25B 15/00

(54) **A METHOD FOR REVAMPING AN ABSORPTION REFRIGERATION SYSTEM**

(71) Applicant: Casale SA, 6900 Lugano (CH)
(72) Inventor: PANZA, Sergio, 22100 Como (IT); BARATTO, Francesco, 22100 Como (IT); BADANO, Marco, 22100 Como (IT)
(74) Representative: Zardi, Marco

(57) **Abstract**

A method for revamping an absorption refrigeration system, comprising: an evaporator (2), wherein a liquid refrigerant (20) evaporates providing a gaseous refrigerant (21); an absorber (3), wherein said gaseous refrigerant (21) is absorbed in a suitable lean solution (23) providing an enriched solution (24) and releasing heat, said heat being removed by a cooling medium; a desorber (4), wherein said enriched solution (24) is heated causing the refrigerant to evaporate providing a gaseous refrigerant (27) and the lean solution (23); an air cooler, wherein the gasesou refrigerant leaving the desorber (4) is condensed by thermal exchange with cooling air providing said liquid refrigerant (20). The method of revamping provides for replacing the air cooler with an evaporative condenser (5).

## Description

### Field of the invention

The invention relates to a method for revamping an absorption refrigeration system. In particular, the invention relates to the revamping of an absorption refrigeration system used to refrigerate a process gas of an ammonia plant.

### Prior art

An absorption refrigeration system essentially comprises: an evaporator wherein a liquid refrigerant is evaporated producing the refrigerating effect; an absorber wherein the refrigerant vapours are absorbed by a lean solution of the refrigerant in a suitable solvent, producing a rich solution and releasing some heat; a desorber wherein the refrigerant vapours are extracted from said rich solution and the above mentioned lean solution is separated for further use in the absorber; an air cooler wherein the refrigerant vapours are condensed to provide the above mentioned liquid refrigerant which is then available for the evaporation process. The lean solution is so defined because is providing the lowest concentration of a low boiling component.

The driving force of the process is the heat furnished to the desorber for separation of the refrigerant vapours from the rich solution. A low-temperature heat is discharged by the air cooler and the absorber. The heat released in the absorber is generally transferred to cooling water by indirect heat exchange.

The evaporator and the absorber are operated at a first pressure; the desorber and the air cooler are operated at a second pressure, which is higher than the first pressure. Generally the first pressure is comprised between vacuum and 5 bar(gauge).

Several variants of absorbent-refrigerants pairs are known. The most common are water-ammonia and litium bromide-water.

Absorption refrigeration systems are used, among others, for the refrigeration of process gas in ammonia plants.

An ammonia plant essentially comprises a front-end section for the production of a make-up synthesis gas comprising H₂ and N₂ from an hydrocarbon feedstock, a compression section for elevating the pressure of the make-up gas to the synthesis pressure and a synthesis loop for the catalytic conversion of the make-up gas into a product gas predominantly made of ammonia.

Said make-up and product gas are provided at elevated temperatures and the heat content of said gas is usually recovered in a number of heat exchangers in series, including for example waste heat boilers and/or boiler feed water (BFW). Absorption refrigeration systems are typically used for cooling the product gas downstream of a water cooler or a gas-gas exchanger, in order to condense and separate the ammonia from said product gas.

However, the absorption refrigeration systems of the prior art have several drawbacks.

A first drawback is the strong dependence from the ambient temperature which makes the absorption refrigeration system less effective under hot ambient temperature conditions (e.g. in summer).

In particular, the ambient temperature affects the condensation of the refrigerant vapours in the air cooler. A higher temperature of the cooling air results in a lower temperature difference (delta T) between the cooling air and the refrigerant and, consequently, a greater condensation pressure. The increase of the condensation pressure causes a corresponding increase of the pressure in the desorber; a higher pressure in the desorber makes available less regeneration heat, therefore less refrigerant is extracted and less refrigeration power is available.

Moreover, due to uncomplete extraction of the refrigerant in the desorber, the lean solution separated from the desorber contains non negligible amounts of refrigerant, being therefore less efficient in the absorption process.

Attempts have been made to solve these drawbacks. For example, using cooling water to condense the gaseous refrigerant instead of using cooling air partially avoided the above problems. However, due to the large amounts of water already required by an absorption refrigerator, the use of an additional amount of water is strongly discouraged. In addition, fresh water may not be available in all sites.

A further drawback connected to the strong dependence of the absorption refrigeration system from the ambient temperature is that the cooling water used in the absorber is available at higher temperature, thus being not able to efficiently cool the rich solution. This implies an increase in the operating pressure of the absorber and the evaporator, which is a notable disadvantage.

In order to overcome the above problem, an additional amount of water might be provided to the absorber. This solution, however, still has the disadvantage of consuming more water. In addition, when revamping an existing plant the increase of the water flow to the absorber would generally cause an unacceptable increase of the pressure drop.

### Summary of the invention

The aim of the invention is to solve the above shortcomings of the prior art. In particular, an aim of the invention is to provide a method for revamping an absorption refrigeration system so that its performances are not negatively affected by an increase in temperature of the surrounding environment.

This aim is reached with a method for revamping an absorption refrigeration system according to claim 1.

Said absorption refrigeration system comprises: an evaporator wherein a liquid refrigerant evaporates providing refrigerant vapours; an absorber wherein said vapours are absorbed in a suitable lean solution providing an enriched solution and releasing heat, said heat being removed by a cooling medium; a desorber wherein said enriched solution is heated, causing the refrigerant to evaporate and obtaining the lean solution; an air cooler wherein the refrigerant leaving the desorber is condensed by thermal exchange with cooling air providing the above liquid refrigerant.

The method of revamping according to the invention provides for replacing the air cooler located downstream of the desorber with an evaporative condenser.

The lean solution is a solution with the lowest concentration of a low temperature boiling component into a solvent; the enriched solution is a solution with high concentration of the low temperature boiling component into said solvent.

In case of water-ammonia absorption systems and similar systems wherein water is the high temperature boiling component, the lean solution is also a dilute solution of the refrigerant into a suitable solvent, while the enriched solution is a concentrated solution of the refrigerant into said solvent.

Advantageously, said evaporative condenser comprises a condensing tube inside which the refrigerant to be condensed circulates. An amount of water is sprayed over the condensing tube and an air flow is pulled over the tube, causing at least a portion of the sprayed water to evaporate and remove heat from the tube and the refrigerant inside. Preferably, said tube is a coil.

The use of an evaporative condenser in said absorption refrigeration system has several advantages above the use of an air cooler.

A first advantage is a decrease in the condensing temperature and a consequent decrease in the condensation pressure. This implies a decrease in the desorption pressure (being the same as the condensation pressure), hence more regeneration heat is available, more refrigerant is extracted and more liquid refrigerant is available to restart the refrigeration cycle. Ultimately, an absorption refrigeration system as revamped according to the invention is much more efficient and less sensitive to the ambient temperature.

The cooling medium which removes heat from the absorber is preferably water.

In certain embodiments, the absorber comprises a plurality of heat exchangers which are traversed in series by said cooling medium. Accordingly, the cooling medium leaving a first heat exchanger passes to a subsequent second heat exchanger, and so on.

In the above cases, and according to a preferred embodiment of the invention, a line for supplying the cooling medium is discontinued in at least one location, between one heat exchanger and a subsequent one of the series. In accordance, the existing plurality of heat exchangers is divided into a first heat exchange section and at least one further heat exchange section, and the so defined heat exchange sections are isolated from the cooling medium side, and then, at least a new line is installed for supplying a flow of an additional cooling medium to at least said second heat exchange section.

Preferably, said at least first and second heat exchange sections are supplied in parallel by the original cooling medium and the additional cooling medium flow, respectively.

Each section may comprise one or more of the exisiting heat exchangers. Preferably, the newly defined heat exchange sections comprise a plurality of heat exchangers and the heat exchangers of each section are traversed in series by the respective cooling medium, which accordingly passes from one heat exchanger of the plurality to a subsequent one.

Preferably, said at least one further heat exchange section operates at a higher temperature than said first heat exchange section.

According to some embodiments, the existing cooling medium line is discontinued in one point of the existing series, thus defining a first heat exchange section operating at a lower temperature and a second heat exchange section operating at a higher temperature, and the newly installed cooling medium line provides for additional water to said second heat exchange section. For example, in a preferred embodiment the absorber has four heat exchangers which are divided into a first and a second section of two exchangers each.

As a result, the first section and the second section are supplied in parallel by the original flow of cooling water and by the additional flow of water, respectively. Within a specific heat exchange section, the heat exchangers forming said section are supplied in series by the respective cooling water (i.e. the original or the additional water, respectively).

According to other embodiments, the existing cooling medium line is discontinued in more than one point of the series, thus defining more than two heat exchange sections. Accordingly, a number of lines equal to the number of the discontinuation points are installed for supplying a cooling medium to the heat exchange sections following the first section, which is still supplied by the original flow of cooling medium.

The above ensures an optimal compromise between an adequate cooling effect of the absorber and an adequate level of pressure inside the evaporator and the absorber, which work at the same pressure.

The invention can be implemented with various commercially available refrigerant-absorbent pairs. As stated above, a preferred embodiment uses ammonia as refrigerant and water as absorbent (or solvent) and is favourable for sub-zero refrigerant temperatures.

According to a preferred embodiment, the desorber is a fractionation column which is supplied with the solution previously obtained in the absorber. Accordingly, the gaseous refrigerant is separated from the top of the fractionation column and a lean solution is recovered from the bottom. The lean solution is a dilute solution of the refrigerant in the solvent.

In case a water-ammonia system is used, a fractionation column is particularly advantageous because minimizes the presence of water in the ammonia refrigerant extracted from the top and avoids water freezing in case the system is employed for the refrigeration process below 0 °C and water accumulation in the evaporator, which would lower the evaporator pressure and negatively affect the performance of the system.

Advantageously, the enriched solution leaving the absorber passes through a pump before entering the desorber, where it is elevated to the higher pressure of the desorber.

Advantageously, said enriched solution is pre-heated in a heat exchanger before entering the desorber by thermal exchange with the lean solution leaving the bottom of the desorber.

According to a preferred embodiment, the gaseous refrigerant leaving the top of the desorber is cooled before entering the evaporative condenser in a heat exchanger located downstream of the desorber.

The method of the invention is particularly attractive when applied to an absorption refrigeration system used to refrigerate a make-up gas or a product gas from an ammonia plant.

Another aspect of the invention is an absorption refrigeration system comprising: an evaporator, wherein a liquid refrigerant evaporates providing a gaseous refrigerant; an absorber, wherein said gaseous refrigerant is absorbed in a lean solution providing an enriched solution and releasing heat, said heat being removed by a cooling medium; a desorber, wherein the enriched solution is heated, causing the refrigerant to evaporate providing a gaseous refrigerant and the lean solution; an evaporative condenser, wherein the gaseous refrigerant leaving the desorber is condensed providing said liquid refrigerant.

According to a preferred embodiment, said absorber comprises a plurality of heat exchangers, said plurality of heat exchangers being divided into at least a first heat exchange section and a second heat exchange section, each section comprising one or more heat exchangers.

Advantageously, said first and second heat exchange sections are supplied in parallel by a first and a second cooling medium, respectively. Within each heat exchange section, the heat exchangers forming the section are supplied in series by the respective cooling medium.

Preferably, the desorber is a fractionation column separating the gaseous refrigerant from the top and the lean solution from the bottom, said lean solution being recycled to the absorber.

Preferably, said absorption refrigeration system comprises a pump downstream of the absorber, elevating the pressure of the enriched solution leaving the absorber to the higher pressure of the desorber.

Preferably, said absorption refrigeration system comprises a heat exchanger upstream of said desorber, wherein the enriched solution is pre-heated by thermal exchange with the lean solution leaving the bottom of the desorber, which is in turn cooled.

Preferably, said absorption refrigeration system comprises a heat exchanger downstream of the desorber, wherein the geaseous refrigerant leaving the top of the desorber is cooled before entering the evaporative condenser.

According to preferred embodiments, the refrigerant is ammonia and the lean solution is a dilute solution of ammonia into water.

The advantages will emerge even more clearly with the aid of the detailed description below relating to a preferred embodiment.

### Description of the figures

Fig. 1 is a simplified scheme of the absorption refrigeration section according to the invention;
Fig. 2 shows in greater detail the absorber of an absorption refrigeration section of the prior art.
Fig. 3 shows in greater detail the absorber of the absorption refrigeration section of Fig. 1.

### Detailed description

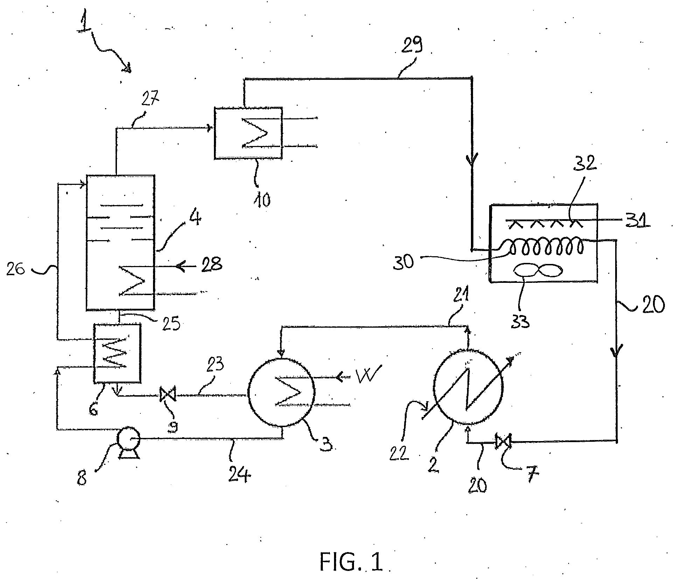

The absorption refrigeration section 1 of Fig. 1 essentially comprises an evaporator 2, an absorber 3, a desorber 4 and an evaporative condenser 5 and uses water-ammonia as the absorbent-refrigerant pair.

The evaporator 2 is supplied with liquid ammonia 20 at a low pressure which evaporates providing ammonia vapours 21 and refrigeration of a current 22 which is for example a product gas of an ammonia plant.

Said ammonia vapours 21 are absorbed by a lean ammonia solution 23 in the absorber 3 with the help of a cooling water W, providing a rich ammonia solution 24.

Said rich solution 24 is sent to the desorber 4 via a pump 8 and a heat exchanger 6 wherein said solution 24 is pre-heated by the lean solution effluent 25 of said desorber 4. The heat recovery within said heat exchanger 6 is advantageous because it reduces the heat input to said desorber 4 and reduces the quantity of heat to be removed inside the absorber 3.

The high-pressure pre-heated solution 26 enters the desorber 4 wherein ammonia vapours 27 are extracted and sent to the evaporative condenser 5, while the lean solution of ammonia 25 is returned to the absorber 3 via said heat exchanger 6. After cooling in the exchanger 6, said lean solution is expanded in a valve 9 to the pressure of the absorber 3, forming the above mentioned stream 23. The heat input to said desorber 4 is provided by a heating medium 28 (for example steam).

Preferably said ammonia vapours 27 are sent to the evaporative condenser 5 after a preliminary cooling in a heat exchanger 10.

Referring to Fig. 1, the vapours 29 leaving said heat exchanger 10 are supplied to said evaporative condenser 5.

Said evaporative condenser 5 comprises a condensing coil 30 receiving the ammonia vapours 29. An amount of water 31 is sprayed over the condensing coil 30 via suitable sprayers 32 and an air flow is pulled over the coil 30 by means of a fan 33, causing a portion of the sprayed water 31 to evaporate. The evaporation of water refrigerates the coil 30 promoting the condensation of the vapours 29 into liquid ammonia 20.

The so obtained liquid ammonia 20 passes through an expansion valve 7 which lowers the pressure of the ammonia 20 from the pressure of the condenser 5 to the lower pressure of the evaporator 2. The ammonia 20 then evaporates again inside the evaporator 2, as above described.

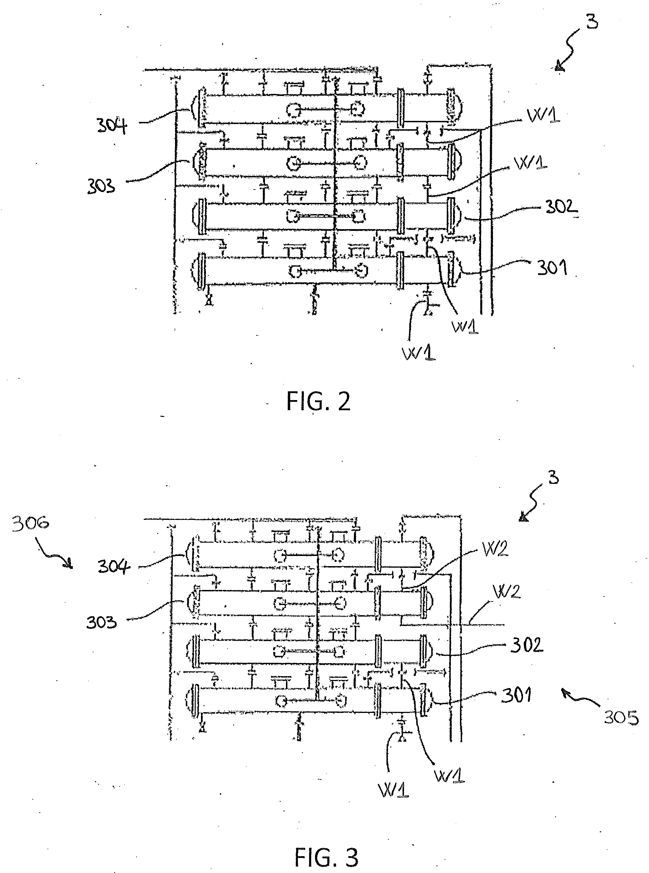

The absorber 3 comprises a plurality of shell-and-tube heat exchangers 301 to 304 (Figs. 2 and 3). The ammonia vapours 21 are mixed with the dilute ammonia solution 23 in the shell-side of said heat exchangers 301 to 304 under substantially the same pressure of the evaporator 2 (apart from pressure drops), providing the rich ammonia solution 24 and releasing latent heat of condensation. Said heat of condensation is removed by cooling water W flowing in the tube-side of the heat exchangers 301 to 304.

Fig. 2 shows how an absorber according to the prior art operates. A stream W1 of cooling water is fed to the the first heat exchanger 301 and the stream of water leaving said heat exchanger 301 passes to the subsequent second heat exchanger 302. Similarly, the water leaving the second heat exchanger 302 passes to the subsequent third exchanger 303, and so on. Accordingly, the heat exchangers are supplied in series with the stream W1 of cooling water.

On the other hand, according to the invention (Fig. 3), a water line W1 is discontinued in a selected location, for example between the heat exchangers 302 and 303 in series, thus defining a first heat exchange section 305 operating at a lower temperature and a second heat exchange section 306 operating at a higher temperature.

A new water line W2 is installed for supplying a flow of additional water to the heat exchanger 303 of the second heat exchange section 306 and the stream of water leaving said heat exchanger 303 passes to the subsequent heat exchanger 304. On the other hand, the heat exchangers 301 and 302 of first section 305 are still fed with the original water flow W1.

As a result, the first heat exchange section 305 and the second heat exchange section 306 are supplied in parallel by the original flow W1 of cooling water and the additional flow W2 of cooling water, respectively, while within sections 305 and 306 the heat exchangers are supplied in series by the respective cooling water.

## Claims

1. A method for revamping an absorption refrigeration system, comprising:
an evaporator (2), wherein a liquid refrigerant (20) evaporates providing a gaseous refrigerant (21);
an absorber (3), wherein said gaseous refrigerant (21) is absorbed in a suitable lean solution (23) providing a rich solution (24) and releasing heat, said heat being removed by a cooling medium;
a desorber (4), wherein said rich solution (24) is heated causing the refrigerant to evaporate providing a gaseous refrigerant (27) and the lean solution (23);
an air cooler, wherein the gaseous refrigerant leaving the desorber (4) is condensed by thermal exchange with cooling air providing said liquid refrigerant (20),
the method of revamping being **characterized by** replacing the air cooler with an evaporative condenser (5).

2. A method according to claim 1, wherein said evaporative condenser (5) includes a condensing tube (30) comprising an internal surface and an external surface, the internal surface being contacted by the gaseous refrigerant and the external surface being sprayed with an amount of water (31) and invested by an air flow.

3. A method according to claim 1 or 2, wherein the absorber (3) comprises a plurality of heat exchangers (301-304) traversed in series by said cooling medium (W1), said cooling medium passing from one heat exchanger of the plurality to a subsequent heat exchanger of the plurality.

4. A method according to claim 3, charcaterized by:
discontinuing the cooling medium flow (W1) at least between one heat exchanger (302) and a subsequent heat exchanger (303) of the plurality, thus defining a first heat exchange section (305) and at least one further heat exchange section (306) after said first heat exchange section, wherein the heat exchange sections are isolated one to each other from the cooling medium side, and
installation of at least one line (W2) for supplying said at least one further heat exchange section (306) with a flow of an additional cooling medium.

5. A method according to any of claims 4, wherein said first (305) and at least one further (306) heat exchange sections are supplied in parallel by the original cooling medium flow (W1) and the additional cooling medium flow (W2), respectively.

6. A method according to claim 4 or 5, wherein said first (305) and at least one further (306) heat exchange sections comprise one heat exchanger or a plurality of heat exchangers.

7. A method according to claims 4 to 6, wherein said at least one further heat exchange section (306) comprises a plurality of heat exchangers (303,304) and the heat exchangers forming said plurality are traversed in series by said flow (W2) of an additional cooling medium, said additional cooling medium passing from one heat exchanger (303) of the plurality to a subsequent heat exchanger (304) of the plurality.

8. A method according to any of claims 4 to 7, wherein said at least one further heat exchange section (306) operates at a higher temperature than said first heat exchange section (305).

9. A method according to any of claims 3 to 8, wherein the cooling medium (W1, W2) used to remove the heat released in the absorber is water.

10. A method according to any one of to any one of the previous claims, wherein the rich solution (24) is pre-heated in a heat exchanger (6) before entering the desorber (4) by thermal exchange with the lean solution (23) leaving the bottom of the desorber (4).

11. A method according to any one of to any one of the previous claims, wherein the gaseous refrigerant (27) leaving the top of the desorber (4) is cooled before entering the evaporative condenser (5) in a heat exchanger (10) located downstream of the desorber (4).

12. A method according to any one of the previous claims, wherein the refrigerant is ammonia and the lean solution (23) is a dilute solution of ammonia into water.

13. An absorption refrigeration system comprising:
an evaporator (2), wherein a liquid refrigerant (20) evaporates providing a gaseous refrigerant (21);
an absorber (3), wherein said gaseous refrigerant (21) is absorbed in a lean solution (23) providing a rich solution (24) and releasing heat, said heat being removed by a cooling medium (W1, W2);
a desorber (4), wherein the rich solution (24) is heated, causing the refrigerant to evaporate providing a gaseous refrigerant (27) and the lean solution (23);
an evaporative condenser (5), wherein the gaseous refrigerant leaving the desorber (4) is condensed providing said liquid refrigerant (20).

14. An absorption refrigeration system according to claim 13, wherein said absorber (3) comprises a plurality of heat exchangers (301-304), said plurality of heat exchangers being divided into at least a first heat exchange section (305) and a second heat exchange section (306), each section comprising one or more heat exchangers.

15. An absorption refrigeration system according to claim 14, wherein the heat exchangers of the first heat exchange section (305) are traversed in series by a first flow (W1) of cooling water and the heat exchangers of the second heat exchange section (306) are traversed in series by a second flow (W2) of cooling water.
